# EUROPEAN PATENT APPLICATION

(11) **EP 4 507 340 A1**
(43) Date of publication of application: **12.02.2025**
(21) Application number: 23784247.1
(22) Date of filing: 03.04.2023
(51) Int. Cl.: H04W 4/02

(54) **METHOD FOR VERIFYING POSITION OF TERMINAL, AND TERMINAL AND NETWORK SIDE DEVICE**

(30) Priority: 06.04.2022 CN 202210357105
(71) Applicant: Vivo Mobile Communication Co., Ltd., Dongguan, Guangdong 523863 (CN)
(72) Inventor: WU, Kai, Dongguan, Guangdong 523863 (CN); WANG, Yong, Dongguan, Guangdong 523863 (CN); SUN, Xiaodong, Dongguan, Guangdong 523863 (CN); WANG, Yuanyuan, Dongguan, Guangdong 523863 (CN)
(74) Representative: Murgitroyd & Company
(86) International application number: PCT/CN2023/085951
(87) International publication number: WO 2023/193684

(57) **Abstract**

Embodiments of this application disclose a method for verifying a location of a terminal, a terminal, and a network side device, and relate to the field of communication technologies. The method for verifying a location of a terminal in the embodiments of this application includes: obtaining, by a network side device, first location information of the terminal; and verifying, by the network side device, the first location information according to first information; or obtaining the first location information through measurement by using a first positioning method, where the first positioning method includes a positioning method based on the network side device or a network-standalone positioning method.

## Description

### CROSS-REFERENCE TO RELATED APPLICATIONS

This application claims priority to Chinese Patent Application No. 202210357105.7, entitled "METHOD FOR VERIFYING LOCATION OF TERMINAL, TERMINAL, AND NETWORK SIDE DEVICE" filed with the China National Intellectual Property Administration on April 6, 2022, which is incorporated herein by reference in its entirety.

### TECHNICAL FIELD

This application relates to the field of communication technologies, and in particular, to a method for verifying a location of a terminal, a terminal, and a network side device.

### BACKGROUND

In a non-terrestrial network (Non-Terrestrial Networks, NTN) scenario, if measurement is performed based on a downlink signal and positioning is performed on a terminal side, location information reported by the terminal may be inaccurate.

To meet a regulatory requirement for a location of a terminal (for example, lawful interception, an emergency call, or a public alert system), a network side device needs to be capable of checking location information reported by the terminal. Therefore, based on existing positioning methods, a special mechanism needs to be designed to support verification of the location information of the terminal by the network side device.

### SUMMARY

Embodiments of this application provide a method for verifying a location of a terminal, a terminal, and a network side device, which can resolve the prior-art problem that location information of a terminal cannot be verified.

According to a first aspect, a method for verifying a location of a terminal is provided, including: obtaining, by a network side device, first location information of the terminal; and verifying, by the network side device, the first location information according to first information; or obtaining the first location information through measurement by using a first positioning method, where the first positioning method includes a positioning method based on the network side device or a network-standalone positioning method.

According to a second aspect, a method for verifying a location of a terminal is provided, including: sending, by the terminal, additional information, where the additional information is used for verifying first location information of the terminal.

According to a third aspect, a network side device is provided, including: an obtaining module, configured to obtain first location information of a terminal; and a verification module, configured to verify the first location information according to first information; or obtain the first location information through measurement by using a first positioning method, where the first positioning method includes a positioning method based on the network side device or a network-standalone positioning method.

According to a fourth aspect, a terminal is provided, including: a sending module, configured to send additional information, where the additional information is used for verifying first location information of the terminal.

According to a fifth aspect, a terminal is provided, where the terminal includes a processor and a memory, the memory stores a program or an instruction runnable on the processor, and the program or the instruction, when executed by the processor, implements the steps of the method according to the second aspect.

According to a sixth aspect, a terminal is provided, including a processor and a communication interface, where the communication interface is configured to send additional information, and the additional information is used for verifying first location information of the terminal.

According to a seventh aspect, a network side device is provided, where the network side device includes a processor and a memory, the memory stores a program or an instruction runnable on the processor, and the program or the instruction, when executed by the processor, implements the steps of the method according to the first aspect.

According to an eighth aspect, a network side device is provided, including a processor and a communication interface, where the communication interface is configured to obtain first location information of a terminal, the first location information is obtained through measurement by using a first positioning method, and the first positioning method includes a positioning method based on the network side device or a network-standalone positioning method; or the processor is configured to verify the first location information according to first information.

According to a ninth aspect, a system for verifying a location of a terminal is provided, including: a terminal and a network side device, where the terminal may be configured to perform the steps of the method according to the second aspect, and the network side device may be configured to perform the steps of the method according to the first aspect.

According to a tenth aspect, a readable storage medium is provided, where the readable storage medium stores a program or an instruction, and the program or the instruction, when executed by a processor, implements the steps of the method according to the first aspect, or implements the steps of the method according to the second aspect.

According to an eleventh aspect, a chip is provided, where the chip includes a processor and a communication interface, the communication interface is coupled to the processor, and the processor is configured to run a program or an instruction to implement the steps of the method according to the first aspect, or to implement the steps of the method according to the second aspect.

According to a twelfth aspect, a computer program/program product is provided, where the computer program/program product is stored in a storage medium, and the computer program/program product is executed by at least one processor to implement the steps of the method according to the first aspect, or to implement the steps of the method according to the second aspect.

In the embodiments of this application, a network side device obtains first location information of a terminal and verifies the first location information according to first information to meet a regulatory requirement for a location of the terminal, to avoid a security problem caused by the terminal reporting incorrect location information, thereby improving communication system performance. Alternatively, a network side device obtains first location information of a terminal, where the first location information is obtained through measurement by using a first positioning method. The first positioning method includes a positioning method based on the network side device or a network-standalone positioning method. The first positioning method can ensure accuracy of the first location information, avoid a security problem caused by the terminal reporting incorrect location information, meet a regulatory requirement for a location of the terminal, and improve communication system performance.

### BRIEF DESCRIPTION OF THE DRAWINGS

FIG. 1 is a schematic diagram of a wireless communication system according to an embodiment of this application;
FIG. 2 is a schematic flowchart of a method for verifying a location of a terminal according to an embodiment of this application;
FIG. 3 is a schematic diagram of a specific positioning signal occupying 12 resource elements according to an embodiment of this application;
FIG. 4 is a schematic diagram of a transmission comb of a specific positioning signal according to an embodiment of this application;
FIG. 5 is a schematic diagram of a transmission comb of a specific positioning signal according to an embodiment of this application;
FIG. 6 is a schematic flowchart of a method for verifying a location of a terminal according to an embodiment of this application;
FIG. 7 is a schematic structural diagram of an apparatus for verifying a location of a terminal according to an embodiment of this application;
FIG. 8 is a schematic structural diagram of an apparatus for verifying a location of a terminal according to an embodiment of this application;
FIG. 9 is a schematic structural diagram of a communication device according to an embodiment of this application;
FIG. 10 is a schematic structural diagram of a terminal according to an embodiment of this application; and
FIG. 11 is a schematic structural diagram of a network side device according to an embodiment of this application.

### DETAILED DESCRIPTION

The technical solutions in embodiments of this application are clearly described in the following with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

The terms "first", "second", and so on in this specification and claims of this application are intended to distinguish between similar objects but are not intended to describe a specific order or sequence. It should be understood that the terms used in such a way are interchangeable in proper circumstances, so that the embodiments of this application can be implemented in other sequences than those illustrated or described herein. In addition, the objects distinguished by "first" and "second" are usually of one type, and there is no limitation on quantities of the objects. For example, there may be one or more first objects. In addition, "and/or" in this specification and the claims indicate at least one of the connected objects, and the character "/" usually indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following descriptions describe a New Radio (New Radio, NR) system for exemplary purposes, and NR terms are used in most of the following descriptions, but these technologies are also applicable to applications other than the NR system application, such as a 6th generation (6th Generation, 6G) communication system.

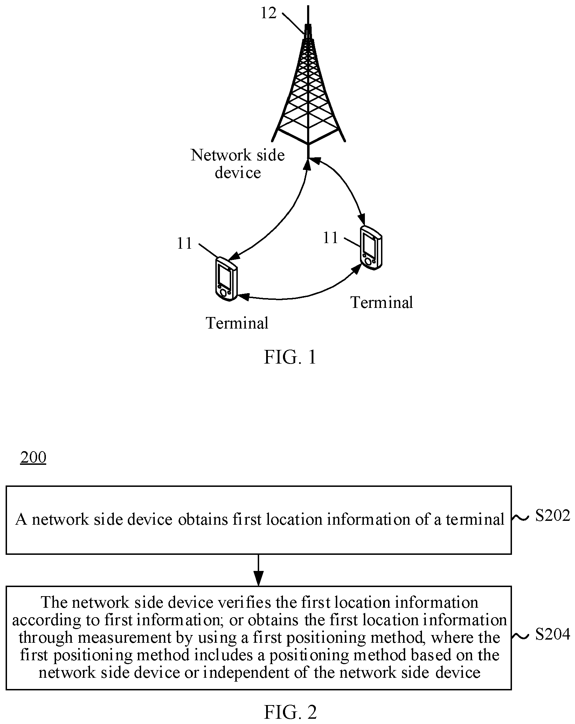

FIG. 1 is a block diagram of a wireless communication system to which an embodiment of this application is applicable. The wireless communication system includes a terminal (User Equipment, UE) 11 and a network side device12. The terminal 11 may be a mobile phone, a tablet personal computer (Tablet Personal Computer), a laptop computer (Laptop Computer) (or referred to as a notebook computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine or a self-service machine, and other terminal-side devices. The wearable device includes a smartwatch, a smart band, a smart headphone, smart glasses, smart jewelry (a smart bracelet, a smart wrist-band, a smart ring, a smart necklace, a smart anklet, a smart ankle chain, and the like), a smart wrist strap, smart clothes, and the like. It should be noted that a specific type of the terminal 11 is not limited in this embodiment of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmission and reception point (Transmitting Receiving Point, TRP), or some other suitable term in the art. As long as the same technical effect is achieved, the base station is not limited to a specific technical term. It should be noted that in this embodiment of this application, only a base station in an NR system is used as an example for description, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in this embodiment of this application, only a core network device in an NR system is used as an example for description, and a specific type of the core network device is not limited.

The method for verifying a location of a terminal provided in the embodiments of this application is described in detail below through some embodiments and application scenarios thereof with reference to the accompanying drawings.

As shown in FIG. 2, an embodiment of this application provides a method 200 for verifying a location of a terminal. The method may be performed by a network side device. In other words, the method may be performed by software or hardware installed in the network side device. The network side device may be an access network device, such as a base station; or may be a core network device, such as a location management function (Location Management Function, LMF). The method includes the following steps.

S202: The network side device obtains first location information of the terminal.

The embodiments of this application may be applied to a scenario of a non-terrestrial network (Non-Terrestrial Networks, NTN). Optionally, that the network side device obtains first location information of the terminal includes: In the NTN, the network side device obtains the first location information of the terminal.

The first location information may be reported to the network side device after being measured by the terminal. S202 may be that the network side device receives first location information from the terminal. Alternatively, the first location information may be obtained through measurement by the network side device. S202 may be that the network side device obtains first location information of the terminal through measurement.

S204: The network side device verifies the first location information according to first information; or obtains the first location information through measurement by using a first positioning method, where the first positioning method includes a positioning method based on the network side device or a network-standalone positioning method.

In an embodiment, the network side device obtains the first location information of the terminal. The network side device may further verify the first location information according to first information, for example, verify whether the first location information is the same as information about an actual location of the terminal.

Optionally, the first information includes at least one of the following:
(1) Additional information (or referred to as assistance information) reported by the terminal. The additional information is used for verifying the first location information. In this example, the network side can determine, through the additional information, whether the first location information is correct or legitimate, so that a regulatory requirement for a location of the terminal is easily met. The additional information is to be described in detail in the subsequent embodiments.
(2) A positioning signal used to obtain the first location information. The positioning signal includes a specific positioning signal. Location information of the terminal obtained through measurement by using the specific positioning signal can meet a specific accuracy requirement. In this way, if the network side device learns that the first location information is obtained through measurement by using the specific positioning signal, the network side device may determine that the first location information is correct or legitimate, and therefore, it is easy to meet the regulatory requirement for the location of the terminal. Optionally, the specific positioning signal includes an NTN-specific positioning signal.

Optionally, the specific positioning signal includes an uplink positioning signal or a downlink positioning signal.

Optionally, the method further includes: sending, by the network side device, configuration information, where the configuration information is used for configuring at least one of the following for the specific positioning signal: (1) a time period range; (2) a frequency magnitude range; (3) a repetition number range; (4) magnitude of a transmission comb (Comb); and (5) a fixed configuration used, where the fixed configuration includes at least one of the following: a time configuration, a frequency domain configuration, and a sequence configuration.

(3) Second location information of the terminal obtained through measurement by using a terrestrial network (Terrestrial Network, TN), where the first location information is obtained through measurement by using an NTN. It may be understood that, the second location information of the terminal obtained through measurement by using the TN is usually accurate and cannot be easily tampered with. In this example, if the second location information is the same as the first location information, or a matching degree is higher than a threshold (for example, 90%), it may be determined that the first location information is correct or legitimate.

In another embodiment, the network side device obtains the first location information of the terminal, where the first location information is obtained through measurement by using a first positioning method. The first positioning method includes a positioning method based on the network side device (NW-based) or a positioning method a network-standalone positioning method (Network Standalone, NW-Standalone). The first positioning method can ensure accuracy of the first location information, avoid a security problem caused by the terminal reporting incorrect location information, and easily meet a regulatory requirement for the location of the terminal. This embodiment can define a positioning method used in an NTN scenario, and it is easy to meet a regulatory requirement for the location of the terminal.

Optionally, the first positioning method includes at least one of the following: (1) uplink time difference of arrival (UL-Time Difference of Arrival, UL-TDOA) positioning; (2) uplink angle of arrival UL-AOA positioning; (3) new radio enhanced cell identifier (NR Enhanced Cell Identifier, NR ECID) positioning; (4) terminal-assisted (UE assisted) enhanced cell identifier (Enhanced Cell Identifier, ECID) positioning; (5) multi-round trip time (Multi-Round Trip Time, Multi-RTT) positioning; (6) terminal-assisted downlink angle of departure (DL-Angle of Departure, DL-AoD) positioning; (7) terminal-assisted downlink time difference of arrival (DL-Time Difference of Arrival, DL-TDOA) positioning; (8) motion sensor positioning; (9) terminal-assisted terrestrial beacon system (Terrestrial Beacon Systems, TBS) positioning; (10) terminal-assisted global navigation satellite system (Global Navigation Satellite System, GNSS) positioning; and (11) terminal-assisted barometric pressure sensor positioning.

According to the method for verifying a location of a terminal provided in this embodiment of this application, a network side device obtains first location information of the terminal, and verifies the first location information according to first information to meet a regulatory requirement for the location of the terminal, to avoid a security problem caused by the terminal reporting incorrect location information, and improve communication system performance. Alternatively, a network side device obtains first location information of the terminal, where the first location information is obtained through measurement by using a first positioning method. The first positioning method can ensure accuracy of the first location information, avoid a security problem caused by the terminal reporting incorrect location information, meet a regulatory requirement for the location of the terminal, and improve communication system performance.

That the terminal reports the additional information used for verifying the first location information is mentioned in the embodiment 200. The following describes the additional information in detail in a plurality of examples.

In an example, for a terminal-based (UE based) downlink time difference of arrival (DL-Time Difference of Arrival, DL-TDOA) positioning method, that is, when the first location information is obtained through measurement based on a DL-TDOA positioning method, the additional information includes at least one of the following:
(1) measurement information quality of each network identifier used for location estimation, where the network identifier includes a physical cell identifier (Physical Cell Identifier, PCI), a global cell identifier (Global Cell Identifier, GCI), or a transmission and reception point (Transmission and Reception Point, TRP) identifier;
(2) country information;
(3) a PCI, a GCI, or a TRP identifier for a measurement, where it may be understood that in the various examples of this application, the PCI, the GCI, and the TRP identifier may alternatively have an "and" relationship;
(4) a downlink reference signal time difference (Reference Signal Time Difference, RSTD);
(5) downlink positioning reference signal (Positioning Reference Signals, PRS) reference signal received power (Reference Signal Receiving Power, RSRP);
(6) timestamp information, where the timestamp information may include time information when location measurement is performed;
(7) beam related information, where the beam related information includes, for example, a synchronization signal/physical broadcast channel signal block/synchronization signal block (Synchronization Signal and PBCH block, SSB) index (index), a channel state information reference signal resource indicator (CSI-RS Resource Indicator, CRI), or a bandwidth part (Band Width Part, BWP) identifier (Identifier, ID); and
(8) quality for each measurement of each network identifier selected for location estimation, where the network identifier includes a PCI, a GCI, or a TRP identifier.

In an example, for a terminal-based downlink angle of departure (DL-Angle of Departure, DL-AoD) positioning method, that is, when the first location information is obtained through measurement based on the DL-AoD positioning method, the additional information includes at least one of the following:
(1) measurement information quality of each network identifier used for location estimation, where the network identifier includes a PCI, a GCI, or a TRP identifier;
(2) country information;
(3) a PCI, a GCI, or a TRP identifier for a measurement;
(4) downlink PRS RSRP; and
(5) timestamp information.

In an example, for a terminal-based or terminal-standalone terrestrial beacon system (Terrestrial Beacon Systems, TBS) positioning method, that is, when the first location information is obtained through measurement based on the TBS positioning method, the additional information includes at least one of the following:
(1) country information;
(2) TBS measurements; and
(3) a measurement quality parameter for a measurement.

In an example, for a terminal-based or terminal-standalone global navigation satellite system (Global Navigation Satellite System, GNSS) positioning method, that is, when the first location information is obtained through measurement based on the GNSS positioning method, the additional information includes at least one of the following:
(1) country information;
(2) code phase measurements;
(3) Doppler measurements;
(4) carrier phase measurements;
(5) a carrier-to-noise ratio of a received signal;
(6) a measurement quality parameter for a measurement; and
(7) other non-GNSS related measurement information.

In an example, for a terminal-based or terminal-standalone barometric pressure sensor positioning method, that is, when the first location information is obtained through measurement based on the barometric pressure sensor positioning method, the additional information includes at least one of the following:
(1) country information; and
(2) barometric pressure sensor measurements.

Optionally, the additional information mentioned in the embodiments of this application further includes: an absolute timing advance (Timing Advance, TA) specific to the terminal, where the absolute TA includes timing precompensation for a primary cell (Primary cell, PCell).

Optionally, in the embodiments of this application that involve additional information, the additional information reported by the terminal for different cells or service satellites differs.

Optionally, in the embodiments of this application that involve additional information, the method further includes: receiving, by the network side device, the additional information through at least one of the following signaling: radio resource control (Radio Resource Control, RRC) signaling; Media Access Control control element (Media Access Control Control Element, MAC CE) signaling; and positioning protocol signaling, such as LTE positioning protocol (LTE Positioning Protocol, LPP) signaling.

Optionally, in the embodiments of this application that involve additional information, the additional information satisfies one of the following:
(1) being reported by the terminal when the terminal is triggered;
(2) being reported by the terminal based on a specific positioning method or using a common field; and
(3) being reported by the terminal periodically.

Optionally, in the embodiments of this application that involve additional information, the method further includes: sending, by the network side device, configuration information, where the configuration information is used for configuring at least one of the following:
(1) whether the terminal needs to report the additional information;
(2) specific positioning scheduling positioning request information, where the positioning scheduling positioning request information is used for instructing the terminal to report the additional information; and
(3) specific request information, where the request information is used for instructing the terminal to report the additional information.

Optionally, in the embodiments of this application that involve additional information, the method further includes: receiving, by the network side device, capability information, where the capability information is used for indicating whether the terminal supports reporting of the additional information. It may be understood that the terminal reports the additional information only in a case that the terminal supports reporting of the additional information.

Optionally, in the embodiments of this application that involve additional information, the additional information includes first additional information and second additional information, and the first additional information and the second additional information are independent of each other. The first additional information is used for verifying the first location information obtained by using a GNSS positioning method. The second additional information is used for verifying the first location information obtained by using a non-GNSS positioning method. The non-GNSS positioning method may be a positioning method other than the GNSS positioning method.

To describe in detail the method for verifying a location of a terminal provided in the embodiments of this application, description is provided below with reference to a plurality of specific embodiments.

### Embodiment 1

This embodiment mainly describes the additional information reported by the terminal (UE). The additional information is used for verifying location information of the terminal by the network side device.

In this embodiment, the UE may report some additional measurements (that is, additional information) for verification of a UE location. The UE location may be a UE location estimated based on GNSS and/or a UE location calculated by the UE based on a non-GNSS positioning method.

For uplink (Uplink, UL) positioning, an NR node (NR Node B, gNB) performs positioning measurement on a sounding reference signal (Sounding Reference Signal, SRS). In this case, the UE does not need to report information to the gNB or an LMF. Therefore, there is generally no need to consider this case.

For downlink (Downlink, DL) positioning, the UE performs measurement on a positioning reference signal (Positioning Reference Signals, PRS), which may be UE-assisted positioning (UE-assisted positioning), or may be UE-based positioning (UE-based positioning). In the UE-assisted positioning, the UE may report specific information required for calculating a location, including additional information. In the UE-based positioning, the UE may report location information, and may further report additional information.

In some embodiments, for UE-based positioning in an NTN case, such as a DL-TDOA positioning method, which may be specifically DL RSTD-based positioning or DL-PRS-RSRP-based positioning, the UE may further report at least one of the following information:
(1) measurement information quality of each PCI, GCI, and TRP identifier used for location estimation (the measurement information quality of each {PCI, GCI, and TRP ID} selected for location estimation);
(2) country information;
(3) a PCI, a GCI, and a TRP identifier for each measurement (PCI, GCI, and TRP ID for each measurement);
(4) a downlink DL RSTD (DL RSTD measurement);
(5) downlink PRS-RSRP (DL-PRS-RSRP measurement);
(6) timestamp information (Time stamp of the measurements);
(7) beam related information (Beam related Information), for example, an SSB index, a CRI, or a BWP ID; and
(8) quality for each measurement of each PCI, GCI, and TRP identifier selected and used for location estimation (Quality for each measurement, for each {PCI, GCI, and TRP ID} selected for location estimation).

In some embodiments, for a UE-based positioning method in an NTN case, such as a DL-AoD positioning method, which may be specifically positioning based on DL PRS RSRP, the UE may further report at least one of the following information:
(1) measurement information quality of each PCI, GCI, and TRP identifier used for location estimation, such as reference signal received power (Reference Signal Receiving Power, RSRP), or reference signal received quality (Reference Signal Receiving Quality, RSRQ);
(2) country information;
(3) a PCI, a GCI or a TRP identifier for each measurement (PCI, GCI and TRP ID for each measurement);
(4) downlink PRS RSRP (DL-PRS-RSRP measurement); and
(5) timestamp information (Time stamp of the measurements).

In some embodiments, for a terminal-based or terminal-standalone (UE-based/standalone) TBS positioning method in an NTN case, the UE may further report at least one of the following information:
(1) country information;
(2) TBS measurements (TBS measurements), which may be code phase measurements (code phase (MBS)); and
(3) measurement quality parameters for each measurement (Measurement quality parameters for each measurement).

In some embodiments, for a terminal-based or terminal-standalone GNSS positioning (UE assisted GNSS positioning) method in an NTN case, the UE may further report at least one of the following information:
(1) country information;
(2) code phase measurements, also referred to as a pseudorange (Code phase measurements, also called pseudorange);
(3) Doppler measurements (Doppler measurements);
(4) carrier phase measurements, also referred to as an accumulated Delta range (Carrier phase measurements, also called Accumulated Delta Range (ADR));
(5) a carrier-to-noise ratio of a received signal (Carrier-to-noise ratio of the received signal);
(6) measurement quality parameters for each measurement (Measurement quality parameters for each measurement); and
(7) other non-GNSS related measurement information (Additional, non-GNSS related measurement information).

In some embodiments, for a terminal-based or terminal-standalone barometric pressure sensor positioning (Barometric pressure sensor positioning) method in an NTN case, the UE may further report at least one of the following information:
(1) country information; and
(2) barometric pressure sensor measurements (Barometric pressure sensor measurements).

In some embodiments, the UE reports an absolute TA specific to the terminal for an NTN primary cell. The TA includes timing precompensation (UE specific absolute TA including timing precompensation (16 bits) for PCell in NTN).

In some embodiments, the UE provides a plurality of different reports for different cells (cell) or different service satellites (satellite). In other words, the additional information reported by the terminal for different cells or service satellites differs.

In some embodiments, the UE may report the additional information based on RRC, Medium Access Control control element (Medium Access Control Control Element) signaling, or LPP signaling.

In some embodiments, the UE reports the additional information when the UE is triggered. For example, a "network Verification" subfield (subfield) is introduced to indicate whether the UE needs to additionally report additional information used for network verification of the location of the UE to the network. Details are shown in the following example.

Trigged reporting (triggered Reporting) information element: This information element (Information element, IE) indicates that triggered reporting is requested, and includes the following subfields (triggered Reporting: This IE indicates that triggered reporting is requested and comprises the following subfields):
(1) A cell change (cell Change) domain: If this subfield is set to TRUE (TRUE), a target device provides requested location information each time the primary cell is changed (cell Change: If this field is set to TRUE, the target device provides requested location information each time the primary cell has changed).
(2) A reporting duration (reporting Duration) domain: indicates a maximum duration of the triggered reporting, and may be in a unit of seconds. If it is set to 0, it is considered as an infinite duration. The target device should continue triggered reporting within a reporting duration or before receiving an LPP abort or LPP error message (reporting Duration: Maximum duration of triggered reporting in seconds. A value of zero is interpreted to mean an unlimited (i.e. "infinite") duration. The target device should continue triggered reporting for the reporting Duration or until an LPP Abort or LPP Error message is received).
(3) A network verification (network Verification) domain: If this subfield is set to TRUE (TRUE), a target device (such as UE) provides additional information for a network to verify a location of the UE (network Verification: If this field is set to TRUE, the target device provides additional information for network to verify the UE location).

In some embodiments, the UE is requested to report the additional information, which may be based on a specific positioning method or using a common field. For example, for a downlink TDOA, an "nr-network Verification-Request" field is introduced to indicate whether the UE is requested to additionally report information used for network verification of the location of the UE to the network. Details are as follows:

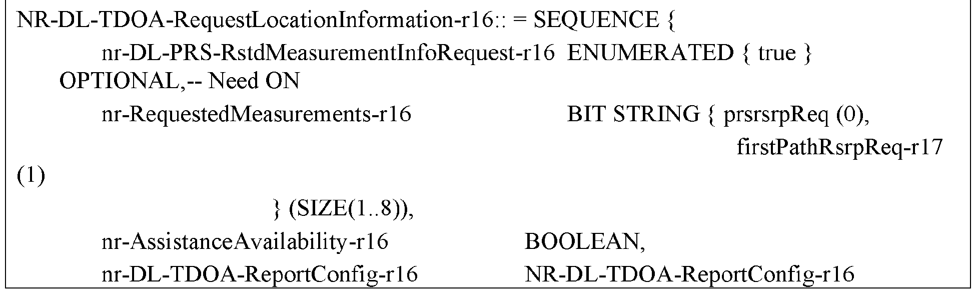

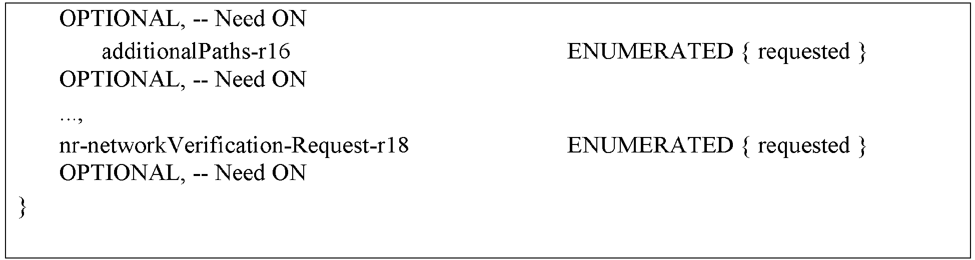

For another example, an "nr-network Verification-Request" field is introduced into a location information request common information element (Common IEs Request Location Information), to indicate whether the UE is requested to additionally report additional information used for network verification of the location of the UE to the network. Details are as follows:

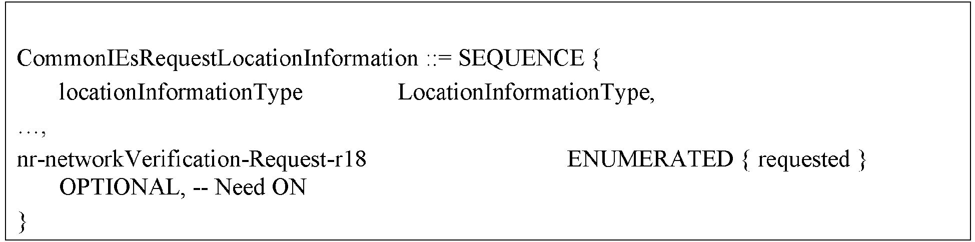

In some embodiments, the UE periodically reports additional information additionally used for network verification of the location of the UE. For example, an NTN-specific reporting interval (reporting interval) and/or a reporting amount (reporting amount) is introduced. Details are as follows:

Periodical reporting (periodical Reporting) information element: This information element indicates that periodical reporting is requested, and includes the following subfields (periodical Reporting: This IE indicates that periodic reporting is requested and comprises the following subfields):
(1) A reporting amount (reporting Amount) domain, indicating the number of periodic location information reports requested. Enumerated values correspond to 1, 2, 4, 8, 16, 32, 64, or infinite/indefinite reports. If the reporting amount field is "infinite/indefinite", the target device should continue periodic reporting until an LPP abort message is received. A sender shall not use a value "ra1" (reporting Amount indicates the number of periodic location information reports requested. Enumerated values correspond to 1, 2, 4, 8, 16, 32, 64, or infinite/indefinite number of reports. If the reporting Amount is 'infinite/indefinite', the target device should continue periodic reporting until an LPP Abort message is received. The value 'ra1' shall not be used by a sender).
(2) A reporting amount NTN (reporting Amount NTN) domain, indicating the number of periodic location information reports requested by the NTN. Enumerated values correspond to 1, 2, 4, 8, 16, 32, 64, or infinite/indefinite reports. If the reporting amount NTN field is "infinite/indefinite", the target device should continue periodic reporting until an LPP abort message is received. A sender shall not use a value "ra1" (reporting Amount NTN indicates the number of periodic location information reports requested for NTN. Enumerated values correspond to 1, 2, 4, 8, 16, 32, 64, or infinite/indefinite number of reports. If the reporting Amount is 'infinite/indefinite', the target device should continue periodic reporting until an LPP Abort message is received. The value 'ra1' shall not be used by a sender).
(3) A reporting interval (reporting Interval) domain, indicating an interval between the location information reporting and a response time requirement of the first location information reporting. Enumerated values ri0-25, ri0-5, ri1, ri2, ri4, ri8, ri16, ri32, and ri64 respectively correspond to reporting intervals of 1, 2, 4, 8, 10, 16, 20, 32, and 64 seconds. If the reporting interval expires before a target device can obtain a new measurement value or a new location estimate, a measurement report that include no measurement value or location estimate is required. A sender shall not use a "no Periodical Reporting" value (reporting Interval indicates the interval between location information reports and the response time requirement for the first location information report. Enumerated values ri0-25, ri0-5, ri1, ri2, ri4, ri8, ri16, ri32, ri64 correspond to reporting intervals of 1, 2, 4, 8, 10, 16, 20, 32, and 64 seconds, respectively. Measurement reports containing no measurements or no location estimate are required when a reporting Interval expires before a target device is able to obtain new measurements or obtain a new location estimate. The value 'no Periodical Reporting' shall not be used by a sender).
(4) A reporting interval NTN (reporting Interval NTN) domain, indicating an interval between the location information reporting and a response time requirement of the first location information report of the NTN. Enumerated values ri0-25, ri0-5, ri1, ri2, ri4, ri8, ri16, ri32, and ri64 respectively correspond to reporting intervals of 1, 2, 4, 8, 10, 16, 20, 32, and 64 seconds. If the reporting interval expires before a target device can obtain a new measurement value or a new location estimate, a measurement report that include no measurement value or location estimate is required. A sender shall not use a "no Periodical Reporting" value (reporting Interval NTN indicates the interval between location information reports and the response time requirement for the first location information report for NTN.. Enumerated values ri0-25, ri0-5, ri1, ri2, ri4, ri8, ri16, ri32, ri64 correspond to reporting intervals of 1, 2, 4, 8, 10, 16, 20, 32, and 64 seconds, respectively. Measurement reports containing no measurements or no location estimate are required when a reporting Interval expires before a target device is able to obtain new measurements or obtain a new location estimate. The value 'no Periodical Reporting' shall not be used by a sender).

In some embodiments, the network additionally configures whether the UE needs to additionally report additional information used for network verification of the location of the UE. For example, an additional information for a network verified location (Additional Information For Network Verified Location) parameter is introduced into an additional information (Additional Information) information element, for indicating whether the UE needs to additionally report the additional information used for network verification of the location of the UE. Details are as follows:

| |
|---|
| ```
 AdditionalInformation ::= ENUMERATED {
   onlyReturnInformationRequested,
   mayReturnAditionalInformation,
   AdditionalInformationForNetworkVerifiedLocation
   ... }
``` |

For another example, an additional information NTN (additional Information NTN) information element is introduced in a common information element for requesting location information (Common IEs Request Location Information). This information element lists whether the UE needs to additionally indicate some additional information used for NTN verification of the location of the UE. Details are as follows:

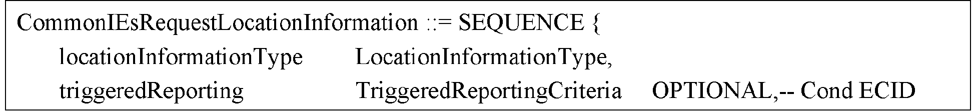

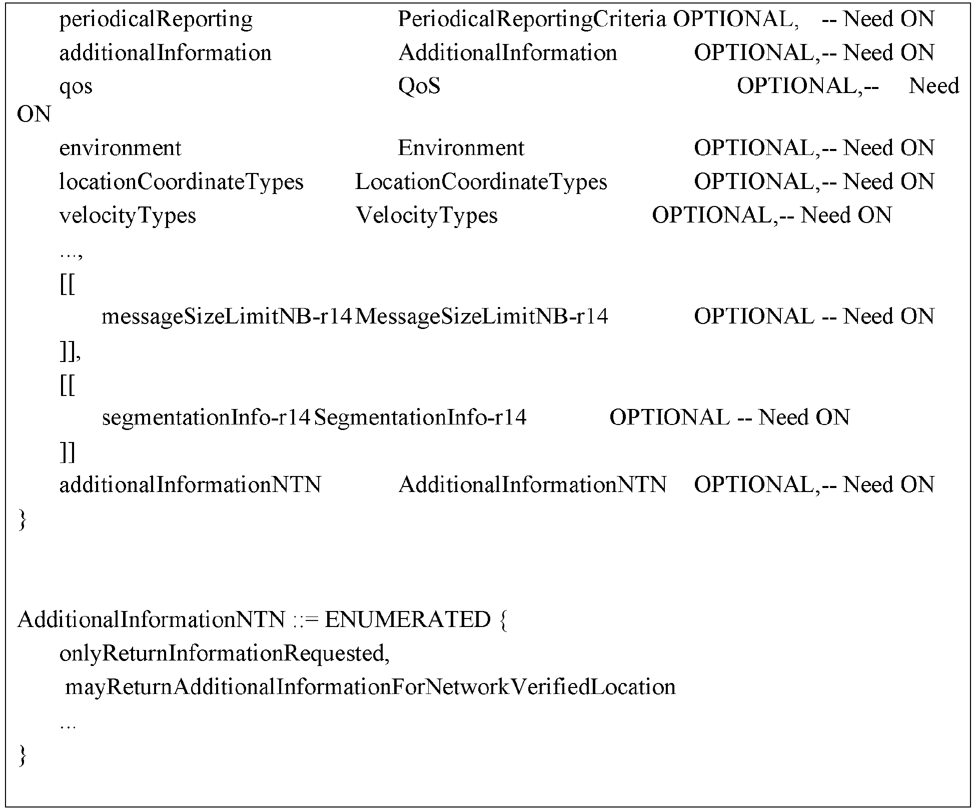

In some embodiments, the network additionally configures NTN-specific positioning scheduling positioning request information. For example, a scheduled location time NTN (scheduled Location Time NTN) field is introduced, to additionally configure NTN network positioning. Details are as follows:

```
ScheduledLocationRequest-r17 ::= SEQUENCE {
       scheduledLocationTime-r17 ScheduledLocationTime-r17,
       scheduledLocationTimeNTN-r18 ScheduledLocationTime-r17,
       ...
   }
```

For another example, a Scheduled Location Request NTN-r18 field is introduced into a location information request common information element (Common IEs Request Location Information), to additionally configured NTN network positioning. Details are as follows:

```
   ScheduledLocationRequestNTN-r18 ::= SEQUENCE{...}
```

In some embodiments, the network additionally configures NTN-specific request (request) information, which may be based on each positioning method or may be common (common). For example, the entire Common IEs Request Location Information may be NTN-specific, and the Common IEs Request Location Information NTN is introduced.

In some embodiments, the UE reports a capability to additionally report information used for NTN network verification of the location of the UE. For example, for an OTDOA positioning method, the UE may report, in an information element of OTDOA-Provide Capabilities through a field Additional Info For Net Verification Report, whether the UE has a capability to report, in the NTN network, additional information used for network verification of the location of the UE to the network. Details are as follows:

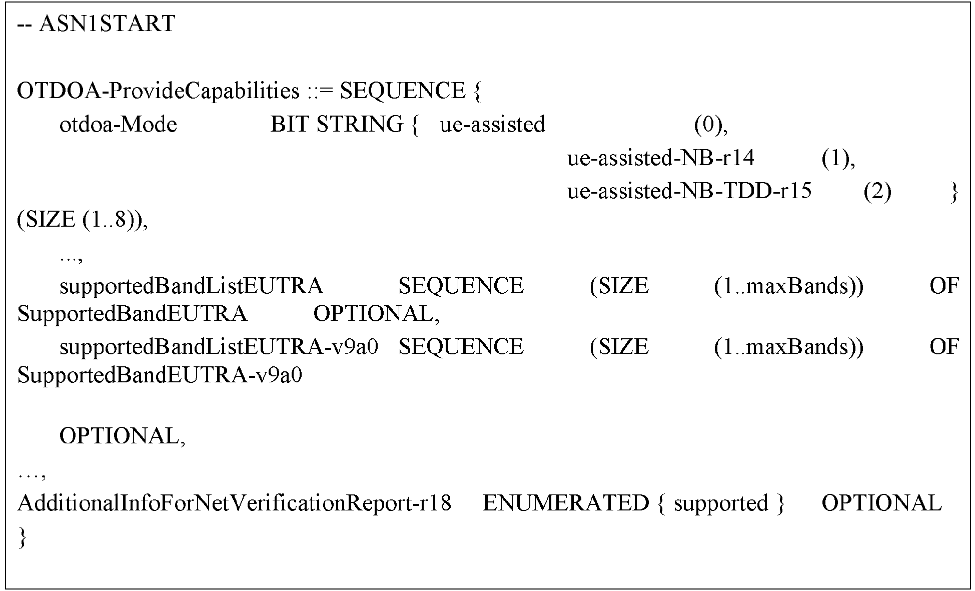

### Embodiment 2

This embodiment mainly describes an NTN-specific (specific) positioning signal. In this embodiment, the NTN-specific positioning signal is introduced to improve accuracy of UE positioning. For example, a transmission density of uplink positioning signals in time and a reporting frequency are improved, to improve the accuracy of UE positioning and an update frequency of a UE location.

In some embodiments, the NTN specific positioning signal may be one of the following: (1) an uplink positioning signal, for example, an uplink SRS signal, specifically used for positioning in an NTN scenario; and (2) a downlink positioning signal, for example, a downlink PRS signal, specifically used for positioning in an NTN scenario.

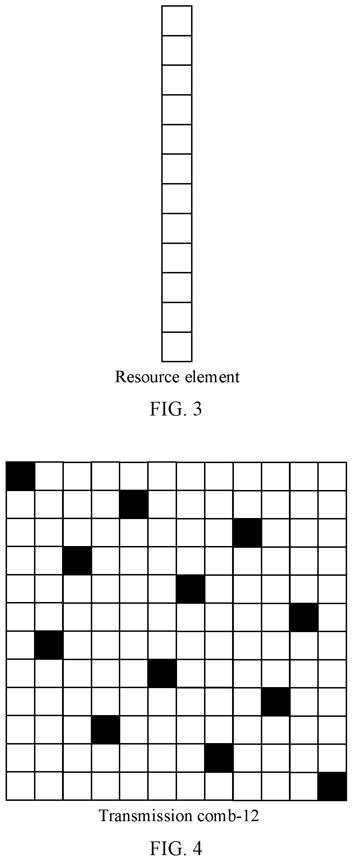

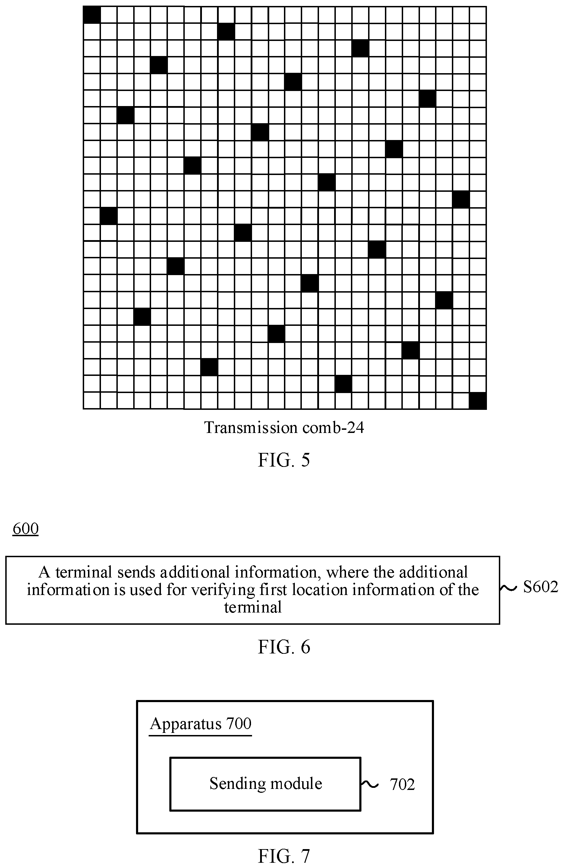

In some embodiments, compared with a TN positioning signal, the NTN-specific positioning signal may have one or more of the following features:
(1) a time period range;
(2) a frequency magnitude range;
(3) a repetition (Repetition) number range, where for example, a maximum repetition number of a PRS signal used for positioning may be increased;
(4) magnitude of a Comb, for example, supporting all resource elements (Resource Element, RE) in a physical resource block (Physical Resource Block, PRB) (each PRB has 12 REs) where the PRS is located on some symbols (symbol), where details are shown in FIG. 3; or for another example, a sparser RE mapping (mapping) in a frequency domain is introduced for an uplink SRS, such as comb-12 or comb-24, and details are shown in FIG. 4 and FIG. 5; or
(5) a fixed configuration used, including at least one of a time configuration, a frequency domain configuration, and a sequence configuration. For example, the last symbol of each available time slot is used for sending an NTN positioning signal.

For an NTN, especially, a low earth orbit (Low Earth Orbit, LEO) scenario, a satellite moves fast, a UE location reporting frequency is high, and a service satellite switching frequency is also high. Frequent reconfiguration of a positioning signal generates a long delay and many signaling overheads. This embodiment can reduce a delay and reduce signaling overheads.

### Embodiment 3

In this embodiment, a UE location estimated through GNSS positioning is verified mainly through additional information.

In some embodiments, the additional information reported by the UE for verifying the UE location estimated based on the GNSS positioning is independent of a non-GNSS positioning process. For example, the UE may additionally report a measurement value of a reference signal (for example, an SSB) on a serving cell or a neighboring cell.

### Embodiment 4

This embodiment focuses on an NTN network and allows only a positioning method in which the network has sufficient location verification information. Optionally, for the NTN network, only one or more of the following positioning estimation methods are allowed:
(1) uplink time difference of arrival (UL-TDOA) positioning;
(2) UL-AOA positioning;
(3) NR ECID positioning;
(4) terminal-assisted (UE-assisted) NR ECID positioning;
(5) Multi-RTT positioning;
(6) terminal-assisted DL-AoD positioning;
(7) terminal-assisted DL-TDoA positioning;
(8) motion sensor positioning (Motion sensor positioning method);
(9) terminal-assisted TBS positioning (UE-assisted Terrestrial Beacon Systems (TBS) positioning);
(10) terminal-assisted GNSS positioning (UE assisted GNSS positioning); or
(11) terminal-assisted barometric pressure sensor positioning (UE-assisted Barometric pressure sensor positioning).

In this embodiment, through the definition by the foregoing positioning method, all specific information required for positioning calculation is learned by the network side device, thereby ensuring that the network side device can determine whether UE positioning is accurate.

The method for verifying a location of a terminal according to the embodiments of this application is described in detail above with reference to FIG. 2. A method for verifying a location of a terminal according to another embodiment of this application is described in detail below with reference to FIG. 6. It can be understood that, interaction between the terminal and a network side device described from the terminal is the same as or corresponds to the description of the network side device in the method shown in FIG. 2. To avoid repetition, related descriptions are appropriately omitted.

FIG. 6 is a schematic flowchart of an implementation of a method for verifying a location of a terminal according to an embodiment of this application. The method may be applied to a terminal. As shown in FIG. 6, the method 600 includes the following steps.

S602: The terminal sends additional information, where the additional information is used for verifying first location information of the terminal.

According to the method for verifying a location of a terminal provided in this embodiment of this application, the terminal sends additional information, where the additional information is used for verifying first location information of the terminal. This meets a regulatory requirement for the location of the terminal, avoids a security problem caused by the terminal reporting incorrect location information, and improves communication system performance.

Optionally, in an embodiment, for a terminal-based DL-TDOA positioning method, the additional information includes at least one of the following: (1) measurement information quality of each network identifier used for location estimation; (2) country information; (3) a PCI, a GCI, or a TRP identifier for a measurement; (4) an RSTD; (5) PRS RSRP; (6) timestamp information; (7) beam related information; and (8) quality for each measurement of each network identifier selected for location estimation, where the network identifier includes a PCI, a GCI, or a TRP identifier.

Optionally, in an embodiment, for a terminal-based DL-AoD positioning method, the additional information includes at least one of the following: (1) measurement information quality of each network identifier used for location estimation, where the network identifier includes a PCI, a GCI, or a TRP identifier; (2) country information; (3) a PCI, a GCI, or a TRP identifier for a measurement; (4) downlink PRS RSRP; and (5) timestamp information.

Optionally, in an embodiment, for a terminal-based or terminal-standalone TBS positioning method, the additional information includes at least one of the following: (1) country information; (2) TBS measurements; and (3) a measurement quality parameter for a measurement.

Optionally, in an embodiment, for a terminal-based or terminal-standalone GNSS positioning method, the additional information includes at least one of the following: (1) country information; (2) code phase measurements; (3) Doppler measurements; (4) carrier phase measurements; (5) a carrier-to-noise ratio of a received signal; (6) a measurement quality parameter for a measurement; and (7) other non-GNSS related measurement information.

Optionally, in an embodiment, for a terminal-based or terminal-standalone barometric pressure sensor positioning method, the additional information includes at least one of the following: (1) country information; and (2) barometric pressure sensor measurements.

Optionally, in an embodiment, the additional information further includes: an absolute TA specific to the terminal, where the absolute TA includes timing precompensation for a PCell.

Optionally, in an embodiment, the additional information reported by the terminal for different cells or service satellites differs.

Optionally, in an embodiment, the additional information satisfies one of the following: (1) being reported by the terminal when the terminal is triggered; (2) being reported by the terminal based on a specific positioning method or using a common field; and (3) being reported by the terminal periodically.

Optionally, in an embodiment, the method further includes: receiving, by the terminal, first configuration information, where the first configuration information is used for configuring at least one of the following: (1) whether the terminal needs to report the additional information; (2) specific positioning scheduling positioning request information, where the positioning scheduling positioning request information is used for instructing the terminal to report the additional information; and (3) specific request information, where the request information is used for instructing the terminal to report the additional information.

Optionally, in an embodiment, the method further includes: sending, by the terminal, capability information, where the capability information is used for indicating whether the terminal supports reporting of the additional information.

Optionally, in an embodiment, the additional information includes first additional information and second additional information, and the first additional information and the second additional information are independent of each other. The first additional information is used for verifying the first location information obtained by using a GNSS positioning method. The second additional information is used for verifying the first location information obtained by using a non-GNSS positioning method.

The method for verifying a location of a terminal provided in this embodiment of this application may be performed by an apparatus for verifying a location of a terminal. In the embodiments of this application, an example in which the apparatus for verifying a location of a terminal performs the method for verifying a location of a terminal is used, to describe the apparatus for verifying a location of a terminal provided in the embodiments of this application.

FIG. 7 is a schematic structural diagram of an apparatus for verifying a location of a terminal according to an embodiment of this application. The apparatus may correspond to a terminal in other embodiments. As shown in FIG. 7, the apparatus 700 includes the following module.

A sending module 702 is configured to send additional information, where the additional information is used for verifying first location information of the terminal.

According to the apparatus for verifying a location of a terminal provided in this embodiment of this application, the sending module sends additional information, where the additional information is used for verifying first location information of the terminal. This meets a regulatory requirement for the location of the terminal, avoids a security problem caused by the terminal reporting incorrect location information, and improves communication system performance.

Optionally, in an embodiment, for a terminal-based DL-TDOA positioning method, the additional information includes at least one of the following: (1) measurement information quality of each network identifier used for location estimation; (2) country information; (3) a PCI, a GCI, or a TRP identifier for a measurement; (4) an RSTD; (5) PRS RSRP; (6) timestamp information; (7) beam related information; and (8) quality for each measurement of each network identifier selected for location estimation, where the network identifier includes a PCI, a GCI, or a TRP identifier.

Optionally, in an embodiment, for a terminal-based DL-AoD positioning method, the additional information includes at least one of the following: (1) measurement information quality of each network identifier used for location estimation, where the network identifier includes a PCI, a GCI, or a TRP identifier; (2) country information; (3) a PCI, a GCI, or a TRP identifier for a measurement; (4) downlink PRS RSRP; and (5) timestamp information.

Optionally, in an embodiment, for a terminal-based or terminal-standalone TBS positioning method, the additional information includes at least one of the following: (1) country information; (2) TBS measurements; and (3) a measurement quality parameter for a measurement.

Optionally, in an embodiment, for a terminal-based or terminal-standalone GNSS positioning method, the additional information includes at least one of the following: (1) country information; (2) code phase measurements; (3) Doppler measurements; (4) carrier phase measurements; (5) a carrier-to-noise ratio of a received signal; (6) a measurement quality parameter for a measurement; and (7) other non-GNSS related measurement information.

Optionally, in an embodiment, for a terminal-based or terminal-standalone barometric pressure sensor positioning method, the additional information includes at least one of the following: (1) country information; and (2) barometric pressure sensor measurements.

Optionally, in an embodiment, the additional information further includes: an absolute TA specific to the apparatus, where the absolute TA includes timing precompensation for a PCell.

Optionally, in an embodiment, the additional information reported by the apparatus for different cells or service satellites differs.

Optionally, in an embodiment, the additional information satisfies one of the following: (1) being reported by the apparatus when the apparatus is triggered; (2) being reported by the apparatus based on a specific positioning method or using a common field; and (3) being reported by the apparatus periodically.

Optionally, in an embodiment, the apparatus 700 further includes a receiving module, configured to receive first configuration information, where the first configuration information is used for configuring at least one of the following: (1) whether the apparatus needs to report the additional information; (2) specific positioning scheduling positioning request information, where the positioning scheduling positioning request information is used for instructing the apparatus to report the additional information; and (3) specific request information, where the request information is used for instructing the apparatus to report the additional information.

Optionally, in an embodiment, the sending module 702 is further configured to send capability information, where the capability information is used for indicating whether the apparatus supports reporting of the additional information.

Optionally, in an embodiment, the additional information includes first additional information and second additional information, and the first additional information and the second additional information are independent of each other. The first additional information is used for verifying the first location information obtained by using a GNSS positioning method. The second additional information is used for verifying the first location information obtained by using a non-GNSS positioning method.

For the apparatus 700 according to this embodiment of this application, refer to the procedure corresponding to the method 600 in the embodiments of this application. In addition, each unit/module in the apparatus 700 and other operations and/or functions described above are respectively intended to implement corresponding procedures in the method 600, and the same or equivalent technical effects can be achieved. For brevity, details are not described herein again.

The apparatus for verifying a location of a terminal in this embodiment of this application may be an electronic device, for example, an electronic device having an operating system, or may be a component in the electronic device, for example, an integrated circuit or a chip. The electronic device may be a terminal or a device other than the terminal. For example, the terminal may include, but is not limited to, the types of the terminal 11 listed above. The another device may be a server, a network attached storage (Network Attached Storage, NAS), or the like. This is not specifically limited in this embodiment of this application.

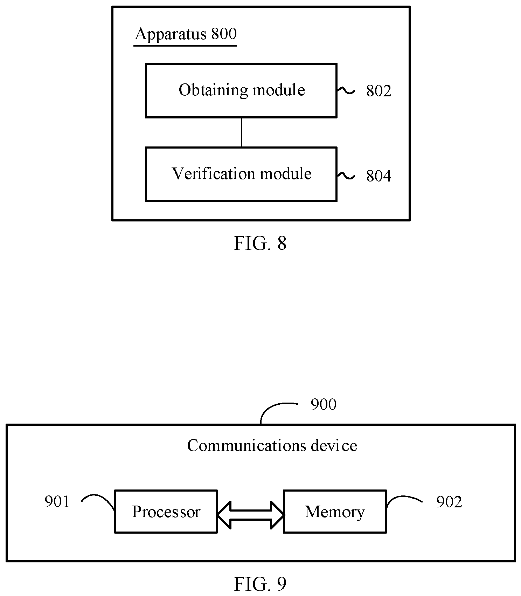

FIG. 8 is a schematic structural diagram of an apparatus for verifying a location of a terminal according to an embodiment of this application. The apparatus may correspond to a network side device in other embodiments. As shown in FIG. 8, the apparatus 800 includes the following modules.

An obtaining module 802 is configured to obtain first location information of the terminal.

A verification module 804 is configured to verify the first location information according to first information; or obtain the first location information through measurement by using a first positioning method, where the first positioning method includes a positioning method based on the network side device or a network-standalone positioning method.

According to the apparatus for verifying a location of a terminal provided in this embodiment of this application, the obtaining module obtains first location information of the terminal, and the verification module verifies the first location information according to first information to meet a regulatory requirement for the location of the terminal, to avoid a security problem caused by the terminal reporting incorrect location information, thereby improving communication system performance. Alternatively, the obtaining module obtains first location information of the terminal, where the first location information is obtained through measurement by using a first positioning method. The first positioning method includes a positioning method based on the network side device or a network-standalone positioning method. The first positioning method can ensure accuracy of the first location information, avoid a security problem caused by the terminal reporting incorrect location information, meet a regulatory requirement for the location of the terminal, and improve communication system performance.

Optionally, in an embodiment, the first information includes at least one of the following: (1) additional information reported by the terminal, where the additional information is used for verifying the first location information; (2) a positioning signal used to obtain the first location information, where the positioning signal includes a specific positioning signal; and (3) second location information of the terminal obtained through measurement by using a TN, where the first location information is obtained through measurement by using an NTN.

Optionally, in an embodiment, for a terminal-based DL-TDOA positioning method, the additional information includes at least one of the following: (1) measurement information quality of each network identifier used for location estimation; (2) country information; (3) a PCI, a GCI, or a TRP identifier for a measurement; (4) an RSTD; (5) PRS RSRP; (6) timestamp information; (7) beam related information; and (8) quality for each measurement of each network identifier selected for location estimation, where the network identifier includes a PCI, a GCI, or a TRP identifier.

Optionally, in an embodiment, for a terminal-based DL-AoD positioning method, the additional information includes at least one of the following: (1) measurement information quality of each network identifier used for location estimation, where the network identifier includes a PCI, a GCI, or a TRP identifier; (2) country information; (3) a PCI, a GCI, or a TRP identifier for a measurement; (4) downlink PRS RSRP; and (5) timestamp information.

Optionally, in an embodiment, for a terminal-based or terminal-standalone TBS positioning method, the additional information includes at least one of the following: (1) country information; (2) TBS measurements; and (3) a measurement quality parameter for a measurement.

Optionally, in an embodiment, for a terminal-based or terminal-standalone GNSS positioning method, the additional information includes at least one of the following: (1) country information; (2) code phase measurements; (3) Doppler measurements; (4) carrier phase measurements; (5) a carrier-to-noise ratio of a received signal; (6) a measurement quality parameter for a measurement; and (7) other non-GNSS related measurement information.

Optionally, in an embodiment, for a terminal-based or terminal-standalone barometric pressure sensor positioning method, the additional information includes at least one of the following: (1) country information; and (2) barometric pressure sensor measurements.

Optionally, in an embodiment, the additional information further includes: an absolute TA specific to the terminal, where the absolute TA includes timing precompensation for a PCell.

Optionally, in an embodiment, the additional information reported by the terminal for different cells or service satellites differs.

Optionally, in an embodiment, the obtaining module 802 is further configured to receive the additional information through at least one of the following signaling: RRC signaling; MAC CE signaling; and positioning protocol signaling.

Optionally, in an embodiment, the additional information satisfies one of the following: (1) being reported by the terminal when the terminal is triggered; (2) being reported by the terminal based on a specific positioning method or using a common field; and (3) being reported by the terminal periodically.

Optionally, in an embodiment, the apparatus 800 further includes a sending module, configured to send first configuration information, where the first configuration information is used for configuring at least one of the following: (1) whether the terminal needs to report the additional information; (2) specific positioning scheduling positioning request information, where the positioning scheduling positioning request information is used for instructing the terminal to report the additional information; and (3) specific request information, where the request information is used for instructing the terminal to report the additional information.

Optionally, in an embodiment, the obtaining module 802 is further configured to receive capability information, where the capability information is used for indicating whether the terminal supports reporting of the additional information.

Optionally, in an embodiment, the specific positioning signal includes an uplink positioning signal or a downlink positioning signal.

Optionally, in an embodiment, the apparatus 800 further includes a sending module, configured to send second configuration information, where the second configuration information is used for configuring at least one of the following for the specific positioning signal: (1) a time period range; (2) a frequency magnitude range; (3) a repetition number range; (4) magnitude of a transmission comb Comb; and (5) a fixed configuration used, where the fixed configuration includes at least one of the following: a time configuration, a frequency domain configuration, and a sequence configuration.

Optionally, in an embodiment, the additional information includes first additional information and second additional information, and the first additional information and the second additional information are independent of each other. The first additional information is used for verifying the first location information obtained by using a GNSS positioning method. The second additional information is used for verifying the first location information obtained by using a non-GNSS positioning method.

Optionally, in an embodiment, the first positioning method includes at least one of the following: (1) UL-TDOA positioning; (2) UL-AOA positioning; (3) NR ECID positioning;
(4) terminal-assisted ECID positioning; (5) Multi-RTT positioning; (6) terminal-assisted DL-AoD positioning; (7) terminal-assisted DL-TDoA positioning; (8) motion sensor positioning; (9) terminal-assisted TBS positioning; (10) terminal-assisted GNSS positioning; and (11) terminal-assisted barometric pressure sensor positioning.

For the apparatus 800 according to this embodiment of this application, refer to the procedures corresponding to the method 200 in the embodiments of this application. In addition, the units/modules in the apparatus 800 and other operations and/or functions described above are respectively intended to implement corresponding procedures in the method 200 and can achieve the same technical effects. To avoid repetition, details are not described herein again.

The apparatus for verifying a location of a terminal provided in this embodiment of this application can implement the processes implemented in the method embodiments of FIG. 2 to FIG. 6 and achieve the same technical effects. To avoid repetition, details are not described herein again.

Optionally, as shown in FIG. 9, an embodiment of this application further provides a communication device 900, including a processor 901 and a memory 902. The memory 902 stores a program or an instruction runnable on the processor 901. For example, when the communication device 900 is a terminal, the program or the instruction, when executed by the processor 901, implements the steps of the foregoing embodiments of the method for verifying a location of a terminal, and the same technical effects can be achieved. When the communication device 900 is a network side device, the program or the instruction, when executed by the processor 901, implements the steps of the foregoing embodiments of the method for verifying a location of a terminal, and the same technical effects can be achieved. To avoid repetition, details are not described herein again.

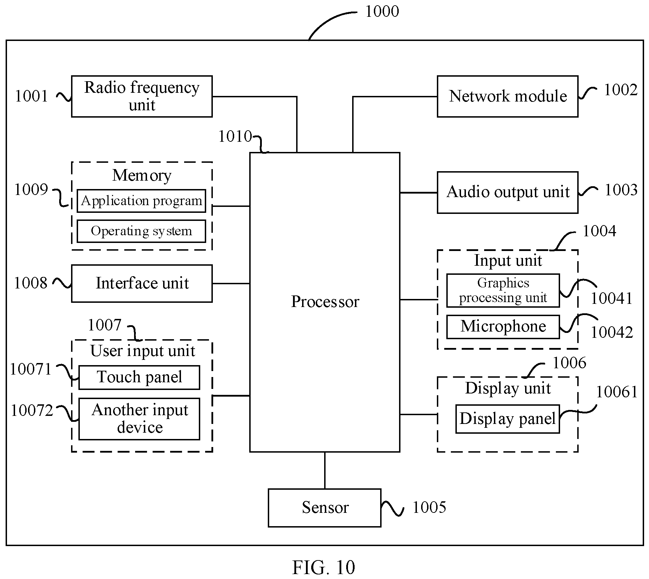

An embodiment of this application further provides a terminal, including a processor and a communication interface. The communication interface is configured to send additional information. The additional information is used for verifying first location information of the terminal. This terminal embodiment corresponds to the foregoing terminal-side method embodiment. Implementation processes and implementations of the foregoing method embodiment all may be applied to this terminal embodiment, and the same technical effects can be achieved. Specifically, FIG. 10 is a schematic diagram of a hardware structure of a terminal that implements an embodiment of this application.

The terminal 1000 includes, but is not limited to: at least some components in a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that, the terminal 1000 may further include a power supply (such as a battery) for supplying power to each component. The power supply may be logically connected to the processor 1010 by using a power management system, thereby implementing functions, such as charging, discharging, and power consumption management, by using the power management system. The terminal structure shown in FIG. 10 constitutes no limitation on the terminal, and the terminal may include more or fewer components than those shown in the figure, or some components may be combined, or a different component deployment may be used. Details are not described herein.

It should be understood that, in this embodiment of this application, the input unit 1004 may include a graphics processing unit (Graphics Processing Unit, GPU) 10041 and a microphone 10042. The graphics processing unit 10041 processes image data of static pictures or videos captured by an image capture apparatus (such as a camera) in a video capture mode or an image capture mode. The display unit 1006 may include a display panel 10061. The display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a functional button (such as a sound volume control button or a power button), a trackball, a mouse, or a joystick. Details are not described herein.

In this embodiment of this application, after receiving downlink data from a network side device, the radio frequency unit 1001 may transmit the downlink data to the processor 1010 for processing. In addition, the radio frequency unit 1001 may send uplink data to the network side device. Usually, the radio frequency unit 1001 includes, but is not limited to, an antenna, an amplifier, a transceiver, a coupler, a low noise amplifier, a duplexer, and the like.

The memory 1009 may be configured to store a software program or instruction and various data. The memory 1009 may mainly include a first storage area storing a program or an instruction and a second storage area storing data. The first storage area may store an operating system, an application program or an instruction required by at least one function (for example, a sound playing function or an image playing function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in this embodiment of this application includes, but is not limited to, these memories and any other suitable types of memories.

The processor 1010 may include one or more processing units. Optionally, the processor 1010 integrates an application processor and a modem processor. The application processor mainly processes operations related to the operating system, a user interface, the application program, and the like. The modem processor mainly processes a wireless communication signal, and is, for example, a baseband processor. It may be understood that, the modem processor may alternatively not be integrated in the processor 1010.

The radio frequency unit 1001 may be configured to send additional information, where the additional information is used for verifying first location information of the terminal.

The terminal provided in this embodiment of this application sends additional information, where the additional information is used for verifying first location information of the terminal. This meets a regulatory requirement for a location of the terminal, avoids a security problem caused by the terminal reporting incorrect location information, and improves communication system performance.

The terminal 1000 provided in this embodiment of this application can further implement the processes of the foregoing embodiment of the method for verifying a location of a terminal, and the same technical effects can be achieved. To avoid repetition, details are not described herein again.

An embodiment of this application further provides a network side device, including a processor and a communication interface. The communication interface is configured to obtain first location information of a terminal. The first location information is obtained through measurement by using a first positioning method. The first positioning method includes a positioning method based on the network side device or a network-standalone positioning method. Alternatively, the processor is configured to verify the first location information according to first information. This network side device embodiment corresponds to the foregoing network side device method embodiment. Implementation processes and implementations of the foregoing method embodiment may all be applied to this network side device embodiment, and the same technical effects can be achieved.

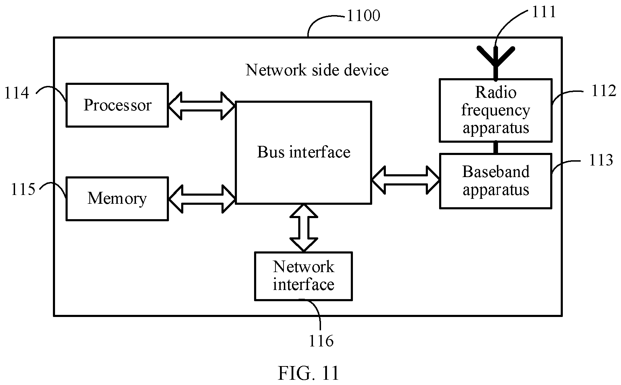

Specifically, an embodiment of this application further provides a network side device. As shown in FIG. 11, the network side device 1100 includes: an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information through the antenna 111, and sends the received information to the baseband apparatus 113 for processing. In a downlink direction, the baseband apparatus 113 processes to-be-sent information, and sends the processed information to the radio frequency apparatus 112. The radio frequency apparatus 112 processes the received information, and then sends out the processed information through the antenna 111.

The method performed by the network side device in the foregoing embodiment may be implemented in the baseband apparatus 113. The baseband apparatus 113 includes a baseband processor.

The baseband apparatus 113 may include, for example, at least one baseband board. A plurality of chips are disposed on the baseband board. As shown in FIG. 11, one chip is, for example, the baseband processor, and is connected to the memory 115 through a bus interface, to call a program in the memory 115 to perform the operations of the network device shown in the foregoing method embodiment.

The network side device may further include a network interface 116. The interface is, for example, a common public radio interface (common public radio interface, CPRI).

Specifically, the network side device 1100 of this embodiment of this application further includes: an instruction or a program stored in the memory 115 and runnable on the processor 114. The processor 114 calls the instruction or the program in the memory 115 to perform the method performed by each module shown in FIG. 8, and the same technical effects are achieved. To avoid repetition, details are not described herein again.

An embodiment of this application further provides a readable storage medium. The readable storage medium stores a program or an instruction. The program or the instruction, when executed by a processor, implements the processes of the foregoing embodiment of the method for verifying a location of a terminal, and the same technical effects can be achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or an instruction, to implement the processes of the foregoing embodiment of the method for verifying a location of a terminal, and the same technical effects can be achieved. To avoid repetition, details are not described herein again.

It should be understood that, the chip mentioned in this embodiment of this application may also be referred to as a system on a chip, a system chip, a chip system, a system-on-chip, or the like.

An embodiment of this application further provides a computer program/program product. The computer program/program product is stored in a storage medium. The computer program/program product is executed by at least one processor to implement the processes of the foregoing embodiment of the method for verifying a location of a terminal, and the same technical effects can be achieved. To avoid repetition, details are not described herein again.

An embodiment of this application further provides a system for verifying a location of a terminal, including: a terminal and a network side device. The terminal may be configured to perform the steps of the method for verifying a location of a terminal as described above. The network side device may be configured to perform the steps of the method for verifying a location of a terminal as described above.

It should be noted that in this specification, the term "include", "comprise", or any other variant thereof is intended to cover a non-exclusive inclusion, so that a process, method, article, or apparatus including a series of elements includes not only those elements, but also other elements not expressly listed, or elements inherent to such a process, method, article, or apparatus. Without more restrictions, the elements defined by the sentence "including a ..." do not exclude the existence of other identical elements in the process, method, article, or apparatus including the elements. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by means of software plus a necessary universal hardware platform, or certainly, by using hardware. However, in many cases, the former is a preferred implementation. Based on such an understanding, the technical solutions of this application essentially, or a part contributing to the related art, may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods according to the embodiments of this application.

The embodiments of this application have been described above with reference to the accompanying drawings, but this application is not limited to the foregoing specific implementations. The foregoing specific implementations are only illustrative instead of restrictive. Under the inspiration of this application, without departing from the purpose of this application and the scope of protection of the claims, a person of ordinary skill in the art can still make many forms, which all fall within the protection of this application.

## Claims

1. A method for verifying a location of a terminal, comprising:
obtaining, by a network side device, first location information of the terminal; and
verifying, by the network side device, the first location information according to first information; or obtaining the first location information through measurement by using a first positioning method, wherein the first positioning method comprises a positioning method based on the network side device or a network-standalone positioning method.

2. The method according to claim 1, wherein the first information comprises at least one of the following:
additional information reported by the terminal, wherein the additional information is used for verifying the first location information;
a positioning signal used to obtain the first location information, wherein the positioning signal comprises a specific positioning signal; and
second location information of the terminal obtained through measurement by using a terrestrial network TN, wherein the first location information is obtained through measurement by using a non-terrestrial network NTN.

3. The method according to claim 2, wherein for a terminal-based downlink time difference of arrival DL-TDOA positioning method, the additional information comprises at least one of the following:
measurement information quality of each network identifier used for location estimation;
country information;
a physical cell identifier PCI, a global cell identifier GCI, or a transmission and reception point TRP identifier for a measurement;
a downlink reference signal time difference RSTD;
downlink positioning reference signal PRS reference signal received power RSRP;
timestamp information;
beam related information; and
quality for each measurement of each network identifier selected for location estimation, wherein
the network identifier comprises a PCI, a GCI, or a TRP identifier.

4. The method according to claim 2, wherein for a terminal-based downlink angle of departure DL-AoD positioning method, the additional information comprises at least one of the following:
measurement information quality of each network identifier used for location estimation, wherein the network identifier comprises a PCI, a GCI, or a TRP identifier;
country information;
a PCI, a GCI, or a TRP identifier for a measurement;
downlink PRS RSRP; and
timestamp information.

5. The method according to claim 2, wherein for a terminal-based or terminal-standalone terrestrial beacon system TBS positioning method, the additional information comprises at least one of the following:
country information;
TBS measurements; and
a measurement quality parameter for a measurement.

6. The method according to claim 2, wherein for a terminal-based or terminal-standalone global navigation satellite system GNSS positioning method, the additional information comprises at least one of the following:
country information;
code phase measurements;
Doppler measurements;
carrier phase measurements;
a carrier-to-noise ratio of a received signal;
a measurement quality parameter for a measurement; and
other non-GNSS related measurement information.

7. The method according to claim 2, wherein for a terminal-based or terminal-standalone barometric pressure sensor positioning method, the additional information comprises at least one of the following:
country information; and
barometric pressure sensor measurements.

8. The method according to claim 2, wherein the additional information comprises:
an absolute timing advance TA specific to the terminal, wherein the absolute TA comprises timing precompensation for a primary cell PCell.

9. The method according to claim 2, wherein the additional information reported by the terminal for different cells or service satellites differs.

10. The method according to claim 2, wherein the additional information satisfies one of the following:
being reported by the terminal when the terminal is triggered;
being reported by the terminal based on a specific positioning method or using a common field; and
being reported by the terminal periodically.

11. The method according to claim 2, wherein the method further comprises: sending, by the network side device, first configuration information, wherein the first configuration information is used for configuring at least one of the following:
whether the terminal needs to report the additional information;
specific positioning scheduling positioning request information, wherein the positioning scheduling positioning request information is used for instructing the terminal to report the additional information; and
specific request information, wherein the request information is used for instructing the terminal to report the additional information.

12. The method according to claim 2, wherein the method further comprises: receiving, by the network side device, capability information, wherein the capability information is used for indicating whether the terminal supports reporting of the additional information.

13. The method according to claim 2, wherein the method further comprises: sending, by the network side device, second configuration information, wherein the second configuration information is used for configuring at least one of the following for the specific positioning signal:
a time period range;
a frequency magnitude range;
a repetition number range;
magnitude of a transmission comb Comb; and
a fixed configuration used, wherein the fixed configuration comprises at least one of the following: a time configuration, a frequency domain configuration, and a sequence configuration.

14. The method according to claim 2, wherein the additional information comprises first additional information and second additional information, and the first additional information and the second additional information are independent of each other, wherein
the first additional information is used for verifying the first location information obtained by using a GNSS positioning method; and
the second additional information is used for verifying the first location information obtained by using a non-GNSS positioning method.

15. The method according to claim 1, wherein the first positioning method comprises at least one of the following:
uplink time difference of arrival UL-TDOA positioning;
uplink angle of arrival UL-AOA positioning;
new radio enhanced cell identifier NR ECID positioning;
terminal-assisted enhanced cell identifier ECID positioning;
multi-round trip time Multi-RTT positioning;
terminal-assisted DL-AoD positioning;
terminal-assisted DL-TDoA positioning;
motion sensor positioning;
terminal-assisted TBS positioning;
terminal-assisted GNSS positioning; and
terminal-assisted barometric pressure sensor positioning.

16. A method for verifying a location of a terminal, comprising:
sending, by the terminal, additional information, wherein the additional information is used for verifying first location information of the terminal.

17. The method according to claim 16, wherein for a terminal-based DL-TDOA positioning method, the additional information comprises at least one of the following:
measurement information quality of each network identifier used for location estimation;
country information;
a PCI, a GCI, or a TRP identifier for a measurement;
an RSTD;
PRS RSRP;
timestamp information;
beam related information; and
quality for each measurement of each network identifier selected for location estimation, wherein
the network identifier comprises a PCI, a GCI, or a TRP identifier.

18. The method according to claim 16, wherein for a terminal-based DL-AoD positioning method, the additional information comprises at least one of the following:
measurement information quality of each network identifier used for location estimation, wherein the network identifier comprises a PCI, a GCI, or a TRP identifier;
country information;
a PCI, a GCI, or a TRP identifier for a measurement;
downlink PRS RSRP; and
timestamp information.

19. The method according to claim 16, wherein for a terminal-based or terminal-standalone TBS positioning method, the additional information comprises at least one of the following:
country information;
TBS measurements; and
a measurement quality parameter for a measurement.

20. The method according to claim 16, wherein for a terminal-based or terminal-standalone GNSS positioning method, the additional information comprises at least one of the following:
country information;
code phase measurements;
Doppler measurements;
carrier phase measurements;
a carrier-to-noise ratio of a received signal;
a measurement quality parameter for a measurement; and
other non-GNSS related measurement information.

21. The method according to claim 16, wherein for a terminal-based or terminal-standalone barometric pressure sensor positioning method, the additional information comprises at least one of the following:
country information; and
barometric pressure sensor measurements.

22. The method according to claim 16, wherein the additional information further comprises:
an absolute timing advance TA specific to the terminal, wherein the absolute TA comprises timing precompensation for a PCell.

23. The method according to claim 16, wherein the additional information reported by the terminal for different cells or service satellites differs.

24. The method according to claim 16, wherein the additional information satisfies one of the following:
being reported by the terminal when the terminal is triggered;
being reported by the terminal based on a specific positioning method or using a common field; and
being reported by the terminal periodically.

25. The method according to claim 16, wherein the method further comprises: receiving, by the terminal, first configuration information, wherein the first configuration information is used for configuring at least one of the following:
whether the terminal needs to report the additional information;
specific positioning scheduling positioning request information, wherein the positioning scheduling positioning request information is used for instructing the terminal to report the additional information; and
specific request information, wherein the request information is used for instructing the terminal to report the additional information.

26. The method according to claim 16, wherein the method further comprises: sending, by the terminal, capability information, wherein the capability information is used for indicating whether the terminal supports reporting of the additional information.

27. The method according to claim 16, wherein the additional information comprises first additional information and second additional information, and the first additional information and the second additional information are independent of each other, wherein
the first additional information is used for verifying the first location information obtained by using a GNSS positioning method; and
the second additional information is used for verifying the first location information obtained by using a non-GNSS positioning method.

28. A network side device, comprising:
an obtaining module, configured to obtain first location information of a terminal; and
a verification module, configured to verify the first location information according to first information; or the obtaining module is further configured to obtain the first location information through measurement by using a first positioning method, wherein the first positioning method comprises a positioning method based on the network side device or independent of the network side device.

29. The network device according to claim 28, wherein the first information comprises at least one of the following:
additional information reported by the terminal, wherein the additional information is used for verifying the first location information;
a positioning signal used to obtain the first location information, wherein the positioning signal comprises a specific positioning signal; and
second location information of the terminal obtained through measurement by using a TN, wherein the first location information is obtained through measurement by using an NTN.

30. A terminal, comprising:
a sending module, configured to send additional information, wherein the additional information is used for verifying first location information of the terminal.

31. A terminal, comprising a processor and a memory, wherein the memory stores a program or an instruction runnable on the processor, and the program or the instruction, when executed by the processor, implements the steps of the method according to any one of claims 16 to 27.

32. A network side device, comprising a processor and a memory, wherein the memory stores a program or an instruction runnable on the processor, and the program or the instruction, when executed by the processor, implements the steps of the method according to any one of claims 1 to 15.

33. A readable storage medium, wherein the readable storage medium stores a program or an instruction, and the program or the instruction, when executed by a processor, implements the steps of the method according to any one of claims 1 to 27.
